# EUROPEAN PATENT APPLICATION

(11) **EP 1 116 889 A2**
(43) Date of publication of application: **18.07.2001**
(21) Application number: 01300015.3
(22) Date of filing: 03.01.2001
(51) Int. Cl.: F16B 35/02

(54) **Longitudinally divided screw**

(30) Priority: 11.01.2000 JP 2000002720
(71) Applicant: Osame, Mitsuo, Sakado, Saitama 350-0214 (JP)
(72) Inventor: Osame, Mitsuo, Sakado, Saitama 350-0214 (JP)
(74) Representative: Wombwell, Francis

(57) **Abstract**

A male screw 1 is divided along a partial length from the head 2 to a part of the shank 3 by a second groove 7 into at least two portions 11, 12. The portions 11, 12 divided by the second groove 7 have their outer peripheral surfaces extending obliquely so that a diameter of the male screw 1 reduces progressively downward from the head 2.

## Description

### BACKGROUND OF THE INVENTION

### FIELD OF THE INVENTION

This invention relates to a male screw.

### Description of the Related Art

It is well known to use a male screw for pivotally connecting a bow to each lens frame of a pair of spectacles.

However, pivoting of the bow progressively loosens the male screw and makes it difficult to stabilize a position of the spectacles on a wearer's face. Occurrence of such loosening is not limited in the case of spectacles but often observed where a rotating force is repetitively exerted on a male screw.

In view of the problem as has been described above, it is a principal object of this invention to provide an improved male screw adapted to be free from loosening during use.

The object set forth above is achieved, according to this invention, by an improvement in a male screw comprising a head and a shank extending downward from the head wherein at least the shank is formed therearound with a screw thread.

The improvement according to this invention is characterized in that the male screw is formed with a groove extending diametrically of the male screw and having a depth extending from the head to a part of the shank to divide the head and the part of the shank into at least two portions of which the outer peripheral surfaces extend obliquely so that the diameter of the male screw reduces progressively downward from the head.

This invention may be implemented also in preferred manners as follows:
(1) The groove divides the head and the part of the shank into at least two portions having inner surfaces opposed to each other with the groove between the portions and a first diameter as measured along the groove between the portions is smaller than a second diameter as measured orthogonally of the groove and the second diameter reduces progressively downward from the head.
(2) The groove presents a V-shaped cross-section.
(3) The respective portions of the shank divided by the groove extend obliquely at an angle 0.1- 30° with respect to the vertical direction.
(4) The portions of the male screw divided by the groove are elastically deformable to be in close to one another and thereby to reduce width of the groove.

### BRIEF DESCRIPTION OF THE DRAWINGS

Fig. 1 is a perspective view of a male screw according to this invention;
Fig. 2 is a sectional view of the male screw mating with a female screw of a tapped hole;
Fig. 3 is a sectional view of the male screw provided with locking means;
Fig. 4 is a view similar to Fig. 1 but showing one preferred embodiment of this invention; and

Fig. 5 is a view similar to Fig. 4 but showing another preferred embodiment of this invention.

### DETAILED DESCRIPTION OF THE PREFERRED EMBODIMENTS

Details of the male screw according to this invention will be more fully understood from the description given hereunder in reference with the accompanying drawings.

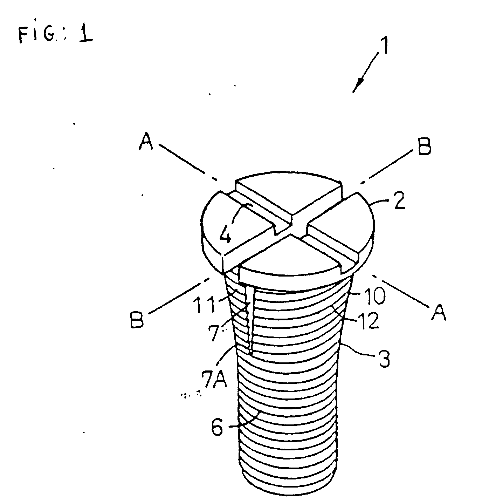

A male screw 1 shown by Fig. 1 in a perspective view is used to connect bows pivotally to lens frames of a pair of spectacles. The male screw 1 is vertically aligned as viewed in the drawing and comprises a head 2 and a shank 3 extending downward from the head 2. The head 2 is formed with a first groove 4 extending in a diametrical direction A to be engaged with a tip of a screw driver. The shank 3 is formed with a screw thread 6 running clockwise downward as viewed in the drawing. The male screw 1 is additionally formed with a second groove 7 extending in a diametrical direction B orthogonal to the first groove 4 and being deeper than the first groove 4.

The second groove 7 extends from the head 2 to a part of the shank 3 and thereby diametrically divides an upper part of the male screw 1 into first and second portions 11, 12 having inner surfaces opposed to each other with the second groove 7 therebetween. The outer peripheral surfaces of these first and second portions 11, 12 flare outward in the direction A, respectively, so that the second groove 7 may present a V-shape in its transverse section. The male screw 1, therefore, has a diameter larger in the direction A than in the direction B and progressively reducing in a region 10 extending from the head 2 to the bottom 7A of the second groove 7. In a region below the bottom 7A, the shank 3 has a cylindrical shape defined by a uniform diameter.

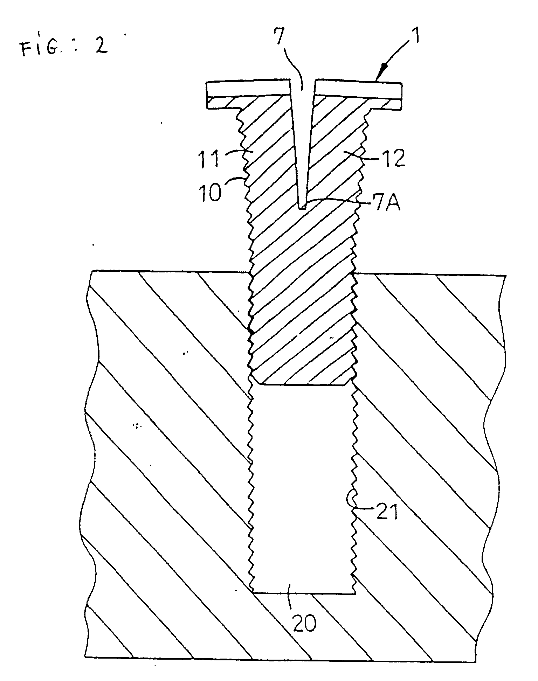

Fig. 2 is a sectional view showing the male screw 1 as being driven by a screw driver (not shown) into a tapped hole 20 having a female thread 21. A partial length of the male screw 1 as measured from the lower end to a level in the vicinity of the bottom 7A of the second groove 7 has been driven into the tapped hole 20 in a conventional manner. Then, the first and second portions 11, 12 flaring outwardly of the male screw 1 are forcibly driven into the tapped hole 20. These two portions 11, 12 are elastically deformed to reduce a width of the V-shaped second groove 7 as the two portions 11, 12 are pressed against the female thread 21. Thus the two portions 11, 12 are forced towards each other.

The male screw 1 having the first and second portions 11, 12 completely driven into the tapped hole 20 under elastic deformation well resists loosening due to repetitive pivoting of the bows and/or repetitive rise and drop of an environmental temperature when the male screw 1 is used to connect the bows to the lens frames of the spectacles.

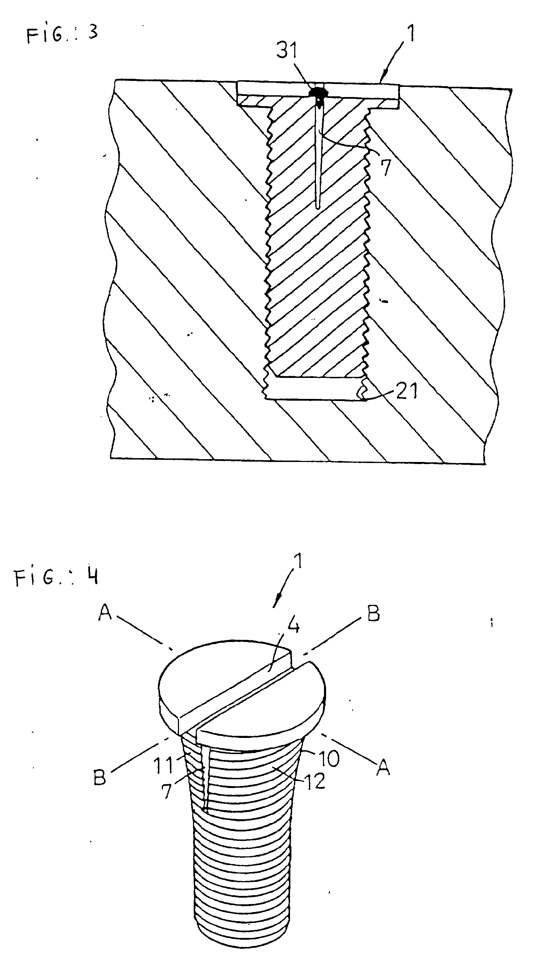

Fig. 3 is a sectional view of the male screw 1 mating with the female thread 21 with an aid of locking means 31. The locking means 31 may be prepared by plastic material such as lead, a hard wedge to be driven into the second groove 7 of the male screw 1 or adhesive of hardening type to be poured into the second groove 7. The locking means 31 functions to prevent the width of the second groove 7 from being reduced and thereby to prevent the male screw 1 from being easily loosened. The second groove 7 is preferably dimensioned to be sufficiently large to receive the locking mans 31 even after the male screw 1 mates with the female thread 21.

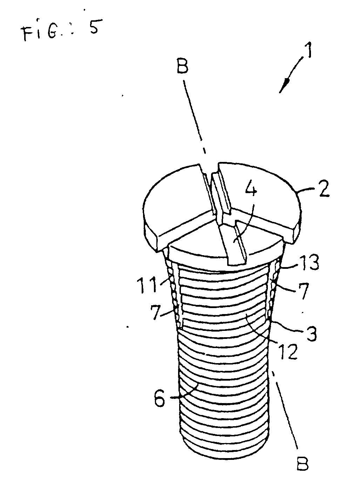

Fig. 4 is a view similar to Fig. 1 but showing one preferred embodiment of this invention. The male screw 1 of Fig. 4 has the first groove 4 adapted to be engaged with a driver and the second groove 7 flaring in the V-shape, both of which extend in the direction B. It is possible to provide the first groove 4 in the form of a crossed groove adapted to be engaged with a crossed head screw driver. It is also possible to configure the head 2 so that a spanner may be engaged with the head 2.

Fig. 5 is a view similar to Fig. 4 but showing another preferred embodiment of this invention. The male screw 1 of Fig. 5 has the first groove 4 and the second groove 7 which is Y-shaped to divide the head 2 and a part of the shank 3 into three portions 11, 12, 13. The first, second and third portions 11, 12, 13 extend obliquely downward so that the shank 3 of the male screw 1 has a diameter progressively reducing from the upper end of the male screw 1 downward.

In accordance with this invention, angles at which the first and second portions 11, 12 or the first, second and third portions 11, 12, 13 extend obliquely with respect to the vertical direction are in a range of 0.1 - 30°, preferably in a range of 0.5 - 20°, more preferably in a range of 1 - 10°. Such angles of the portions 11, 12, 13 can be achieved by forcibly opening a groove prepared in a U-shape initially in the male screw 1 into the groove 7 in the V-shape. It is also possible to achieve such angles of the portions 11, 12, 13 through molding of the male screw 1, for example, injection molding of the male screw 1. While the male screw 1 has the head 2 of which a diameter is larger than a diameter of the shank 3 in Figs. 1- 5, the head 2 and the shank 3 may have a same diameter without departing from the scope of this invention. The male screw 1 may be made of material such as metal or plastics so far as this material allows the portions 11, 12, 13 to be elastically deformed inward in the diametrical direction A of the male screw 1. While the male screw 1 has been described in a case that the male screw 1 is used for the spectacles, there is no particular limitation in an application as well as size of the male screw 1 of this invention.

### Effect of the Invention

As will be apparent from the foregoing description, a male screw according to this invention is divided along the partial length extending from the head to a part of the shank of the screw by grooves into at least two portions. These portions have outer peripheral surfaces extend obliquely outward at an angle of 0.1 - 30°. These portions are elastically deformed inwardly by a female thread and pressed against the female thread as the male screw is driven into a tapped hole having the female thread. The male screw mating with the female thread is prevented from easily loosening.

## Claims

1. A male screw comprising a head and a shank extending downward from the head wherein at least the shank is formed therearound with a screw thread, characterized in that:
the male screw is formed with at least one groove extending diametrically or radially thereof and having a depth extending from the head to a part of the shank to divide the head and the part of the shank into at least two portions of which the outer peripheral surfaces extend obliquely so that the diameter of the male screw progressively reduces downward from the head.

2. A male screw according to claim 1, wherein the groove extends diametrically of and divides the head and the part of the shank into at least two portions having inner surfaces opposed to each other with the groove between the portions and a first diameter as measured along the groove is smaller than a second diameter as measured orthogonally of the groove and the second diameter reduces progressively downward from the head.

3. A male screw according to claim 1 or 2, wherein the groove presents a V-shaped cross-section.

4. A male screw according to any one of claims 1 - 3, wherein the respective portions of the male shank divided by the grooves extend obliquely at an angle of 0.1 - 30° with respect to the vertical direction.

5. A male screw according to claim 1, wherein the at least one groove is 'Y' shaped to divide the head and a part of the shank into three portions.

6. A male screw according to any one of claims 1 - 5, wherein the portions of the male screw divided by the groove are elastically deformable towards one another and thereby to reduce width of the groove.

7. A male screw substantially as hereinbefore described with reference to the accompanying drawings.
